Europäisches Patentamt

European Patent Office

Office européen des brevets

(19)

(11) **EP 0 711 496 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(21) Anmeldenummer: **94917644.0**

(22) Anmeldetag: **18.05.1994**

(51) Int Cl.⁶: **H05B 3/14**

(86) Internationale Anmeldenummer:
**PCT/EP94/01604**

(87) Internationale Veröffentlichungsnummer:
**WO 95/04443 (09.02.1995 Gazette 1995/07)**

(54) **KERAMISCHES HEIZELEMENT SOWIE VERFAHREN ZUR HERSTELLUNG EINES SOLCHEN HEIZELEMENTS**

CERAMIC HEATING ELEMENT AND PROCESS FOR PRODUCING SUCH A HEATING ELEMENT

ELEMENT CERAMIQUE CHAUFFANT ET PROCEDE DE FABRICATION D'UN ELEMENT CHAUFFANT DE CE TYPE

(84) Benannte Vertragsstaaten:
**DE FR IT NL**

(30) Priorität: **30.07.1993 DE 4325606**

(43) Veröffentlichungstag der Anmeldung:
**15.05.1996 Patentblatt 1996/20**

(73) Patentinhaber: **Bach, Wolfdietrich Dipl.-Ing.
12683 Berlin (DE)**

(72) Erfinder: **PETROWSKI, Vitali Jaroslawowitsch
Kiew, 252179 (UA)**

(74) Vertreter: **Wolf, Eckhard, Dr.-Ing.
Patentanwälte Wolf & Lutz
Hauptmannsreute 93
70193 Stuttgart (DE)**

(56) Entgegenhaltungen:
**FR-A- 1 002 178          GB-A- 225 608
GB-A- 243 854          US-A- 3 309 643
US-A- 4 449 039**

**Beschreibung**

Die Erfindung betrifft ein Heizelement mit einem wärmeleitenden dielektrischen Grundkörper aus gesintertem keramischem Material und mindestens einem mit dem Grundkörper thermisch gekoppelten, mit elektrischem Strom beaufschlagbaren Heizleiter sowie ein Verfahren zur Herstellung des Heizelements.

Aus der GB-A-225 608 ist ein keramisches Heizelement dieser Art bekannt. Der Heizleiter ist dort durch in Nuten des keramischen Grundkörpers eingebrachtes Graphitpulver gebildet und wird über metallische Schrauben mit Strom beaufschlagt, welche die Oberfläche des Grundkörpers durchdringen.

Auch aus der GB-A-243 854 ist es bei einer Heizvorrichtung bekannt, den Grundkörper aus gesondertem Keramikmaterial herzustellen, wobei ein nicht näher spezifiziertes Widerstandsmaterial als Heizleiter vorgesehen ist, welches über metallische Kontaktmittel wie Schrauben oder Stifte mit der Grundkörperoberfläche verbunden ist.

Nach der DE-OS-30 11 297 und der US-A-3 309 643 wird vorgeschlagen, ein Heizelement aus keramischem Material mit Heizleitern aus metallischem Widerstandsmaterial zu versehen.

Bei einem keramischen Heizelement der eingangs genannten Art ist es weiter bekannt (DE-A-35 12 483), den Heizleiter aus einem elektrisch leitenden, gesinterten keramischen Körper herzustellen und mit einem Grundkörper aus einem elektrisch isolierenden gesinterten keramischen Körper zu verbinden. Im Grundkörper sind Leitungsdrähte eingebettet, die zum Heizleiter führen. Das Heizelement besteht dabei aus einem gesinterten Körper aus einem Gemisch aus $MoSi_2$-Pulver und $Si_3N_4$-Pulver mit einem Teilchendurchmesser, der größer als der des $MoSi_2$-Pulvers ist. Die leitende Schicht befindet sich dort in direktem Kontakt mit dem zu beheizenden Medium und gewährleistet daher keinen Schutz gegen das Abfließen von elektrischem Strom.

Bekannt ist weiterhin ein Hochtemperatur-Heizelement (DE-A-38 43 863), bei welchem auf ein Substrat aus Aluminiumnitrid ein Heizleiter aus Molybdändisilizit-Paste im Siebdruckverfahren aufgedruckt ist und auf das bedruckte Substrat ein weiteres Substrat aus Aluminiumnitrid sandwichartig aufgelegt und zusammen mit diesem und dem eingebetteten Heizleiter zusammengesintert ist. Die geringe Dicke der aufgedruckten Heizleiterpaste bedingt eine hohe Stromdichte im Heizelement und kann zu einer Überbeanspruchung an ungleichmäßig aufgedruckten Stellen und damit längerfristig zu einer Zerstörung der Heizleiterbahn führen. Dies gilt umsomehr, als die aufgedruckte Heizleiterpaste sich hinsichtlich des thermischen Ausdehnungskoeffizienten erheblich vom Substratmaterial unterscheidet, auch wenn zur Anpassung an den thermischen Ausdehnungskoeffizienten bis zu 40 % andere Stoffe der Paste beigemischt werden. Bei den sehr hohen Temperaturwechselbelastungen, denen ein Hochtemperatur-heizelement ausgesetzt ist, können sich auch schon relativ kleine Unterschiede im Ausdehnungskoeffizienten negativ auf die Thermoschockbeständigkeit auswirken.

Ausgehend hiervon liegt der Erfindung die Aufgabe zugrunde, die bekannten Hochtemperaturheizelemente der eingangs angegebenen Art dahingehend zu verbessern, daß bei gegebener Wärmeleistung und hoher über die Oberfläche abgegebener Wärmestromdichte eine geringere elektrische Stromdichte im Heizleiter auftritt und eine verbesserte Thermoschockbeständigkeit gewährleistet ist. Eine weitere Aufgabe besteht in der Angabe eines Verfahrens zur Herstellung eines solchen Heizelements.

Zur Lösung dieser Aufgabe werden die in den Patentansprüchen 1 und 21 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, einen Heizleiter mit möglichst großem Leitungsquerschnitt so auszubilden und in das dielektrische Keramikmaterial zu integrieren, daß ein guter interner Wärmeübergang und das gleiche thermische Wärmeausdehnungsverhalten zwischen Heizleiter und dielektrischem Grundmaterial gewährleistet ist. Um dies zu erreichen, wird gemäß der Erfindung vorgeschlagen, daß der Heizleiter als in eine kanalartige Ausnehmung des dielektrischen Grundkörpers eingebetteter, mit elektrisch leitfähigen Partikeln dotierter, an seiner Oberfläche mit dem Keramikmaterial des Grundkörpers monolithartig zusammengesinterter und an mindestens zwei Enden zu Kontaktabgriffen an der Grundkörperoberfläche geführter Keramikstrang gebildet ist. Ein wesentlicher Vorteil der Erfindung wird darin gesehen, daß in dem nach außen hin vollständig isolierten Heizelement ein langgestreckter und dickwandiger Heizleiter untergebracht werden kann, in welchem bei gegebener Heizstromstärke eine relativ geringe Heizstromdichte auftritt, die zu keiner Überbeanspruchung des Heizleiters führen kann. Außerdem kann aufgrund der erfindungsgemäßen Maßnahmen der Keramikstrang hinsichtlich seiner thermischen Ausdehnungsfähigkeit exakt auf das keramische Material des dielektrischen Grundkörpers eingestellt werden. Besonders vorteilhaft ist es in diesem Zusammenhang, wenn der Keramikstrang das gleiche Keramikmaterial wie der dielektrische Grundkörper enthält und dabei vorzugsweise zu 50 bis 90 % aus diesem Keramikmaterial besteht. Vorteilhafterweise weist der Keramikstrang einen Volumenanteil von 1 bis 10 % bezogen auf das Grundkörpervolumen auf.

Gemäß einer bevorzugten Ausgestaltung der Erfindung enthalten der dielektrische Grundkörper und der Keramikstrang ein Gemisch aus $Si_3N_4$ und $Si_2ON_2$ vorzugsweise im Verhältnis 3:1 bis 25:1 als Keramikmaterial. Dieses Gemisch kann zusätzlich Oxidkomponenten vorzugsweise aus der Gruppe $Al_2O_3$ - $TiO_2$ - CaO mit einem Gewichtsanteil von 4 bis 25 % enthalten, wobei die genannten Oxidkomponenten auch in Kombination etwa im Volumenverhältnis von 28:10:2 bis 5:1:2 beigemischt sein können.

Als elektrisch leitfähige Partikel enthält der Keramikstrang vorteilhafterweise Nitride, Carbide und/oder Boride des Tantal oder Zirkonium und Kohlenstoff in einem durch einen vorgegebenen temperaturabhängigen spezifischen elektrischen Widerstand angepaßten Mengenverhältnis.

Eine weitere vorteilhafte Ausgestaltung der Erfindung sieht vor, daß in einem Rohling des Grundkörpers mindestens eine Ausnehmung und/oder ein Durchbruch zur paßgenauen Aufnahme eines Keramikstrangrohlings ausgespart und mit diesem monolithartig zusammengesintert ist. Vorteilhafterweise ist der Grundkörper aus mindestens zwei an einander zugewandten Trennflächen monolithartig zusammengesinterten Rohlingen gebildet, von denen mindestens einer eine Ausnehmung und/oder einen Durchbruch zur paßgenauen Aufnahme des Keramikstrangrohlings aufweist. Vorzugsweise ist der Grundkörper aus mindestens drei sandwichartig an Trennflächen zusammengesinterten Rohlingen gebildet, von denen mindestens ein innenliegender Rohling einen Durchbruch für einen Keramikstrangrohling und einer der äußeren Rohlinge mindestens zwei fensterartige Durchbrüche für den Durchgriff der Kontaktenden des Keramikstrangs aufweist. Die Rohlinge sind dabei zweckmäßig als an ihren Breitseiten paarweise zusammengesinterte Platten oder Rohrstücke ausgebildet. Um mehrere, stufenweise umschaltbare Heizstromkreise in einem Grundkörper unterbringen zu können, ist es vorteilhaft, wenn mindestens zwei durch einen Rohling voneinander getrennte, mit Durchbrüchen für je einen Keramikstrang versehene innenliegende, zusammengesinterte Rohlinge vorgesehen sind, wobei die Keramikstränge in der Nähe eines Kontaktendes miteinander verbunden, vorzugsweise zusammengesintert sein können und mehrere durch Außendurchbrüche zur Grundkörperoberfläche geführte Kontaktabgriffe aufweisen.

Zur Herstellung der Kontaktabgriffe wird in den Grundkörperrohling mindestens ein mit der kanalartigen Ausnehmung kommunizierender, zur Grundkörper-Oberfläche führender fensterartiger Durchbruch für den Durchgriff eines einen Kontaktabgriff bildenden Endes des Heizleiterrohlings eingebracht.

Zur Montageerleichterung wird gemäß einer bevorzugten Ausgestaltung der Erfindung vorgeschlagen, daß die Kontaktabgriffe durch in Fensterausnehmungen außen liegender Grundkörper-Rohlinge getrennt als elektrisch leitfähige Keramikrohlinge eingesetzte, mit dem benachbarten Keramikstrang verpreßte und zusammengesinterte Keramikstrangteile gebildet sind. Zur Verbesserung des Stromübergangs an den Kontaktabgriffen sind diese zweckmäßig mit einer Metallschicht versehen. An die Kontaktabgriffe können elektrische Leiter angeklemmt, angelötet oder angeschweißt werden.

Die einzelnen plattenförmigen Rohlinge weisen zweckmäßig Wandstärken von ca. 0,3 bis 2 mm auf, während die Keramikstränge einen Leitungsquerschnitt von 0,4 bis 5 mm$^2$ aufweisen können.

Bei der Herstellung der keramischen Heizelemente, bei welchen ein wärmeleitender dielektrischer Grundkörper aus gesintertem keramischem Material und ein mit elektrischem Strom beaufschlagbarer Heizleiter in unmittelbaren thermischen Kontakt gebracht werden, wird zweckmäßig wie folgt vorgegangen:

-   Mindestens ein den Grundkörper bildender zunächst ungesinterter Rohling aus dielektrischem Keramikmaterial wird mit mindestens einer kanalartigen Ausnehmung versehen;

-   ein weiterer ungesinterter Rohling aus einem mit elektrisch leitenden Partikeln dotierten dielektrischen Keramikmaterial wird unter Bildung des Heizleiters in eine geometrisch an die kanalartige Ausnehmung angepaßte Strangform gebracht;

-   der strangförmige Rohling wird in die kanalartige Ausnehmung des Grundkörperrohlings formschlüssig eingesetzt, mit diesem unter Herstellung eines engen Oberflächenkontakts mechanisch verpreßt und anschließend bei erhöhter Temperatur und/oder bei erhöhtem Druck monolithartig zusammengesintert.

Vorteilhafterweise werden zur Herstellung des Grundkörpers mehrere bandförmige, plattenförmige oder rohrförmige Rohlinge verwendet, von denen einzelne mit den kanalartigen Ausnehmungen, vorzugsweise in Form von Durchbrüchen, versehen, in den Ausnehmungen mit dem strangförmigen Heizleiterrohling bestückt und dann mit den anderen Grundkörperrohlingen sandwichartig gegeneinandergelegt oder ineinandergeschachtelt, gegeneinandergepreßt und zusammengesintert werden.

Um den Keramikpulvergemischen die gewünschte Form der Rohlinge zu geben und beim Verpressen einen verbesserten Oberflächenkontakt zwischen den einzelnen Rohlingen zu erzielen, enthalten die ungesinterten Rohlinge ein vorzugsweise elastomeres Bindemittel, das beim Sintern zumindest teilweise ausgedampft wird. Die Rohlinge auf Si$_3$N$_4$-Si$_2$ON$_2$-Basis mit Beimengungen werden zweckmäßig bei Temperaturen von 1600 bis 1800 °C und in Stickstoffatmosphäre bei einem Druck von 50 bis 70 bar zusammengesintert.

Die erfindungsgemäßen keramischen Heizelemente werden bevorzugt zur Herstellung von keramischen Heizvorrichtungen für alle Anwendungen der Elektrowärme, insbesondere in Heizplatten, Durchlauferhitzern, Infrarotstrahlern, Heizextrudern, Heißluftgebläsen eingesetzt.

Durch Einbringen von zwei miteinander in Kontakt stehenden Stromleitersträngen mit unterschiedlichem elektrischen Widerstand ist auch ein Thermoelement herstellbar, bei dem durch Erwärmen der Kontaktstelle ein elektrischer Strom erzeugt wird, der proportional zur Temperatur ansteigt und das Messen hoher Temperaturen ermöglicht.

Im folgenden wird die Erfindung anhand einiger in der Zeichnung in schematischer Weise dargestellter Ausführungsbeispiele näher erläutert. Es zeigen

Fig. 1a    ein keramisches Heizelement mit dreischichtigem Grundkörper und einem Heizleiter in schaubildlicher Darstellung;

Fig. 1b    ein elektrisches Schaltbild des Heizelements nach Fig. 1a;

Fig. 2a    ein keramisches Heizelement mit fünfschichtigem Grundkörper und zwei Heizleitern in schaubildlicher Darstellung;

Fig. 2b    ein elektrisches Schaltbild des Heizelements nach Fig. 2a:

Fig. 3a    drei plattenförmige Rohlinge des Grundkörpers des Heizelements nach Fig. 1a in schaubildlicher Darstellung;

Fig. 3b    Rohlinge des elektrisch leitenden Keramikstrangs nach Fig. 1a in schaubildlicher Darstellung;

Fig. 4a    ein zylindrisches keramisches Heizelement in schaubildlicher Darstellung;

Fig. 4b    ein Schaltbild des Heizelements nach Fig. 4a.

Die in der Zeichnung dargestellten Heizelemente bestehen im wesentlichen aus einem wärmeleitenden dielektrischen Grundkörper 10 aus gesintertem keramischem Material und mindestens einem in einer kanalartigen oder fensterartigen Ausnehmung 12,14 des Grundkörpers 10 eingebetteten Heizleiter 16,18. Der Heizleiter 16,18 besteht aus einem mit elektrisch leitfähigen Partikeln dotierten Keramikstrang, der in Form und Größe der jeweiligen Ausnehmung 12,14 im Grundkörper 10 angepaßt ist.

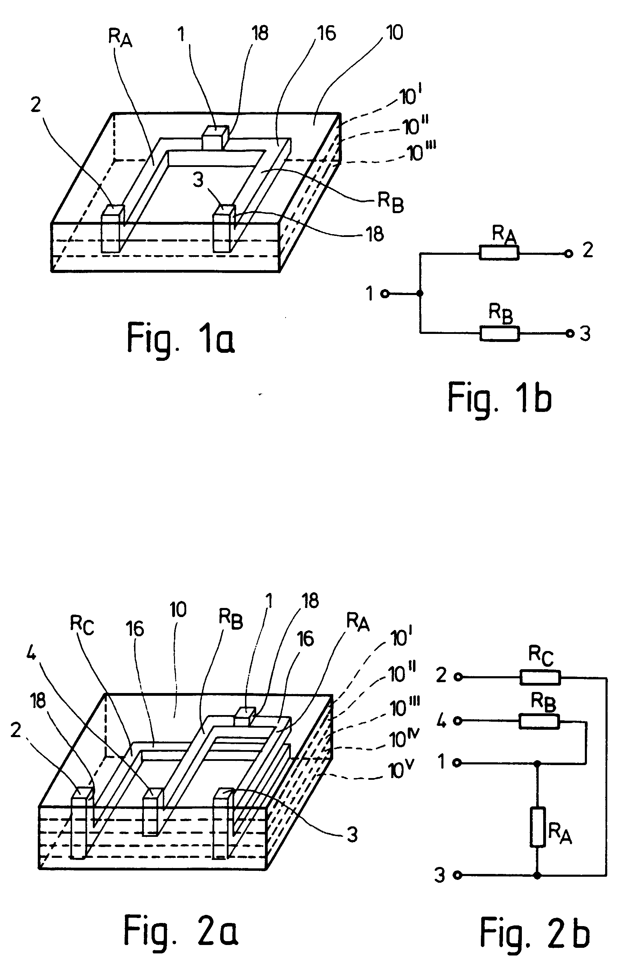

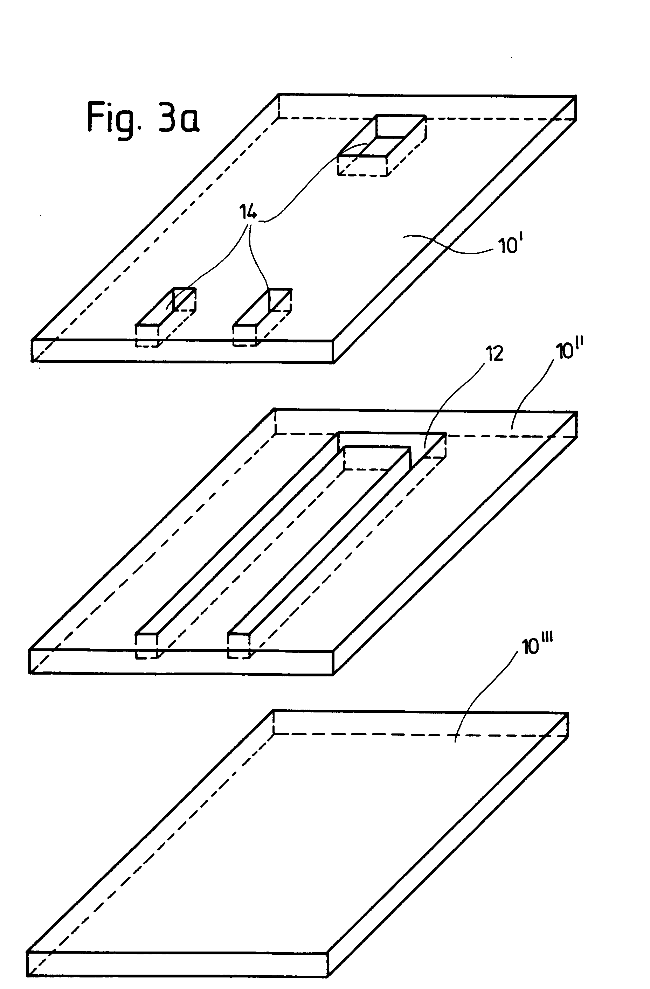

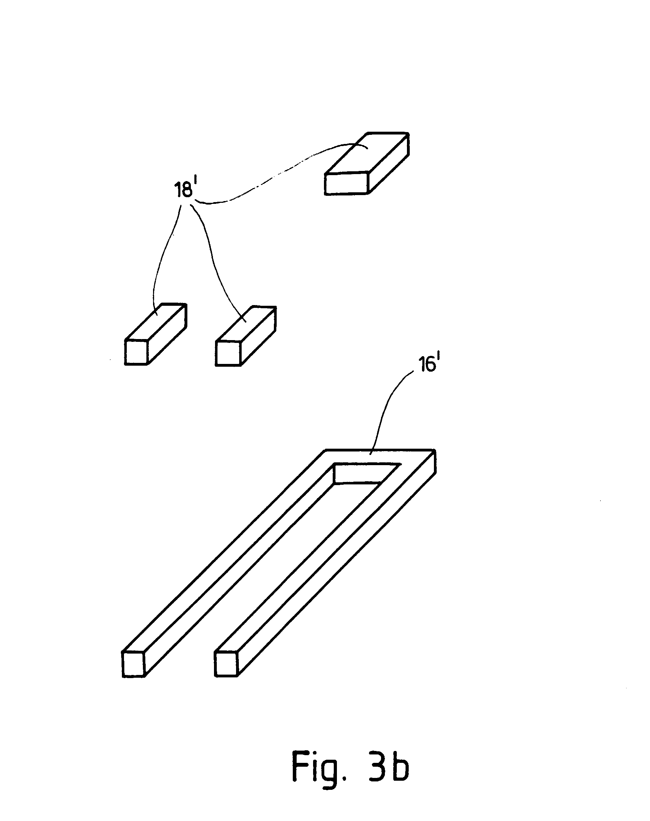

Zur Herstellung des Heizelements nach Fig. 1a werden die in Fig. 3a und b gezeigten Keramikrohlinge 10', 10'', 10''' sowie 16' und 18' verwendet. In den anfangs ungesinterten plattenförmigen Rohlingen 10' und 10'' aus dielektrischem keramischem Material werden die kanalartigen Ausnehmungen 12,14 in Form von durchgehenden Durchbrüchen ausgestanzt, während die elektrisch leitenden Rohlinge 16' und 18' in eine den Ausnehmungen entsprechende Form gebracht werden. Sodann werden die Rohlinge 16' und 18' in die Ausnehmungen 12 und 14 eingesetzt und mit den Rohlingen 10'' und 10' unter Herstellung eines guten Oberflächenkontakts verpreßt. Im Anschluß daran werden die auf diese Weise vorbereiteten Rohlinge 10',10'' und 10''' sandwichartig aufeinandergelegt, miteinander verpreßt und in einem Sinterofen in Stickstoffatmosphäre unter einem Druck von 50 bis 70 bar und bei einer Temperatur von 1600 bis 1800 °C unter Bildung eines monolithartigen Körpers gesintert. Die über die Fensteröffnungen 14 von außen her zugänglichen Keramikstrangteile 18 bilden Kontaktabgriffe 1,2,3 für den Anschluß von Stromzuführungen zur Aufheizung des Heizleiters 16. Den zwischen den Kontaktabgriffen 1,2,3 angeordneten Heizleiterabschnitten sind elektrische Widerstände $R_A$, $R_B$ zugeordnet, die je nach Beschaltung der Kontaktabgriffe 1,2,3 vom Heizstrom durchflossen werden (vgl. Fig. 1b).

Bei dem in Fig. 2a und b gezeigten Ausführungsbeispiel sind fünf plattenförmige Rohlinge 10',10'',10''',10$^{IV}$ und 10$^V$ vorgesehen, zwischen denen in den Schichten 10'' und 10$^{IV}$ je ein U-förmiger Heizleiterstrang 16 in entsprechenden Ausnehmungen 12 angeordnet sind. Die Heizleiterstränge sind im Bereich des Kontaktabgriffs 3 elektrisch miteinander verbunden. Die Herstellung dieses Heizelements erfolgt ähnlich wie beim Heizelement nach Fig. 1a durch Zusammensintern der mit den Heizleitersträngen 16',16'' bestückten Rohlingen 10' bis 10$^V$. Durch die Kontaktabgriffe 1 bis 4 werden drei Widerstandsbereiche $R_A$, $R_B$ und $R_C$ abgegrenzt, die wahlweise mit Heizstrom beaufschlagbar sind. Damit kann die Leistungsaufnahme des Heizelements 10 stufenweise variiert werden (vgl. Fig. 2b).

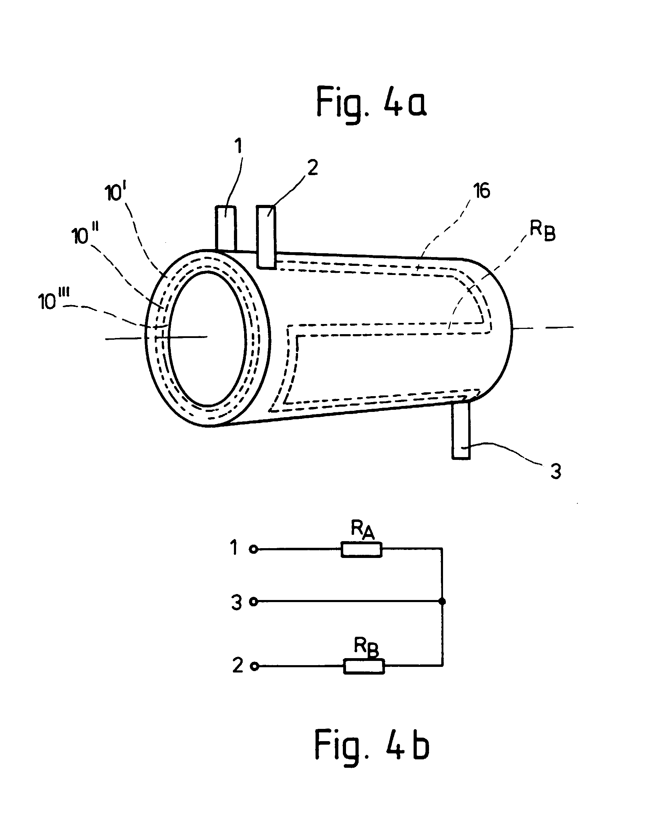

Bei dem Ausführungsbeispiel nach Fig. 4a sind statt der ebenen Rohlinge ineinandergeschachtelte zylindrische Rohlinge 10',10'',10''' vorgesehen, deren mittlerer Rohling 10'' mit einer mäanderförmigen, kanalartigen Ausnehmung zur Aufnahme eines entsprechend geformten Keramikstrangs 16 versehen ist. Die Kontaktabgriffe 1, 2, 3 sind hier durch radiale Fensteröffnungen im äußeren Rohling 10' nach außen geführt, wobei der Mittenanschluß 3 wiederum eine Unterteilung des Heizleiters 16 in zwei Widerstandsbereiche $R_A$ und $R_B$ ermöglicht. Während bei den Ausführungsbeispielen nach Fig. 1a und 2a vor allem die Breitseitenflächen des Grundkörpers 10 als Heizflächen ausgebildet sind, ist es bei dem Ausführungsbeispiel nach Fig. 4a die Außenfläche und/oder die Innenfläche des Grundkörpers.

**Auaführuhgsbeispeile**

Zur Herstellung der Isolatorkeramik für den Einsatz in Heizelementen wurden vier Proben A, B, C und D untersucht, deren Gemengezusammensetzung und Eigenschaften in der nachstehenden Tabelle zusammengestellt sind:

| Mischungsverhältnisse (Gewichtsanteile) | | | | | Eigenschaften | | | | |
|---|---|---|---|---|---|---|---|---|---|
| Gemenge | $Si_3N_4$:$Si_2ON_2$ | | $Al_2O_3$:$TiO_2$:CaO | | a)Wärmedehnung<br>b)Durchschlagfestigkeit<br>c)Wärmeleitfähigkeit<br>d)Thermoschockbeständigkeit<br>e)Rißfestigkeit | | | | |
| | 5:1 | 18:1 | 14:5:1 | 5:1:2 | a) $10^{-6}K^{-1}$ | b) kV/mm | c) W/mK | d) $\Delta T°C$ | e) MN/m$^{\frac{3}{2}}$ |
| A | 5 | | 1 | | 3.8 | 4.5 | 25 | 560 | 3.5 |
| B | | 5 | | 1 | 4.5 | 6 | 30 | 480 | 3.8 |
| C | 20 | | 1 | | 3.2 | 12 | 55 | 630 | 6.9 |
| D | | 20 | | 1 | 2.9 | 9 | 45 | 600 | 4.2 |

Pulverförmiges Siliziumnitrid ($Si_3N_4$) und Siliziumoxinitrid ($Si_2ON_2$) wurden mit Gewichtsverhältnissen 5:1 bzw. 18:1 zu einem ersten Pulvergemisch gleichmäßig miteinander vermischt. Außerdem wurde ein zweites Pulvergemisch aus $Al_2O_3$-$CiO_2$-CaO im Gewichtsverhältnis von 14:5:1 bzw. 5:1:2 hergestellt. Sodann wurden das erste Gemisch und das zweite Gemisch in einem Volumenverhältnis von 5:1 bzw. 20:1 unter Bildung der keramischen Pulvermischungen A, B, C und D vermischt und mit fünf Masseprozent Kautschuk als Bindemittel versetzt. Dieses Gemenge wurde granuliert, indem es durch ein Sieb mit Lochgröße 1 bis 1,5 mm gedrückt wurde. Das Granulat wurde zwischen Walzen unter Querschnittsabnahme von 20 % bei einem Kontaktdruck von 50 MPa verdichtet. Dabei wurde ein Band mit vorgegebener Dicke geformt. Aus diesem Band wurden die plattenförmigen Rohlinge 10',10'', 10''' und gegebenenfalls 10$^{IV}$ und 10$^V$ ausgeschnitten und die Durchbrüche 12,14 ausgestanzt.

Zur Herstellung der Stromleiterkeramik kann die vorstehend beschriebene keramische Pulvermischung vor dem Zusatz des Kautschuk-Bindemittels, je nach gewünschtem elektrischen Widerstand mit einem Zusatz von 10 bis 50 Volumenprozent von Nitriden, Carbiden oder Boriden des Tantal oder Zirkon und 0,5 bis 15 Volumenprozent pulverförmigem Kohlenstoff in Form von Graphit versetzt werden. In der nachstehenden Tabelle ist für das Beispiel der Probe C eine Gemengezusammensetzung der Stromleiterkeramik und deren Eigenschaften angegeben.

| Mischungsverhältnisse | | | Eigenschaften | | | | | |
|---|---|---|---|---|---|---|---|---|
| Isolator gemenge z.B. C | TaN | Kohlenstoff | PTC | Wärmedehnung | Widerstand | Widerstand nach 23000 Zyklen | Widerstandsdrift | Dicke der Schicht |
| Vol% | Vol% | Vol% | $R_{800}$:$R_{20}$ | $10^{-6}K^{-1}$ | $\Omega$ | $\Omega$ | % | µm |
| 89.5 | 10 | 0.5 | 1.2 | 2.8 | 400 | 399 | 0.3 | 400 |
| 75 | 10 | 15 | 1.17 | 3.0 | 75 | 76 | 1.3 | 360 |
| 49.5 | 50 | 0.5 | 1.08 | 3.4 | 35 | 36 | 2.8 | 420 |
| 35 | 50 | 15 | 1.2 | 3.8 | 5 | 5.2 | 4 | 440 |

Für die Stromleiterkeramik wurde das plastifizierte Pulvergemisch mit einer Granulatgröße von > 1,5 mm mit einer Querschnittsabnahme von 30 % und einem Kontaktdruck von 75 MPa zu einem Band geformt, aus dem die Heizleiterstränge bei den in der Tabelle angegebenen Beispielen mit einer Breite von 4 mm und einer Länge von 160 mm und der im einzelnen angegebenen Schichtdicke nach Art der Rohlinge 16',18' ausgeschnitten wurden.

Der aus den Rohlingen 10' bis $10^V$,16',18' zusammengefügte Sandwich wurde anschließend bei ca. 1700 °C und 50 bar in einer Stickstoffatmosphäre unter Herstellung eines monolithartigen Körpers gesintert, wobei die in den vorstehenden Tabellen angegebenen Eigenschaften erzielt wurden. Der Schichtaufbau des Sandwich kann auch in beliebiger anderer Form, z.B. als Kreisscheibe, als Rohr oder als komplizierter räumlicher Körper erfolgen.

Zu der Keramikstruktur in der Isolatorkeramik und der Stromleiterkeramik ist noch folgendes auszuführen:

Siliziumnitrid $Si_3N_4$ bildet mit dem Siliziumoxinitrid $Si_2ON_2$ und dem Aluminiumoxid $Al_2O_3$ die Einphasenverbindung O'-Sialon, die sich durch sehr hohe Temperaturbeständigkeit auszeichnet. Der Prozeß der Herausbildung dieser Verbindung verläuft über eine Flüssigphase an den Korngrenzen des Basismaterials. Diese flüssige Phase bildet sich aus $Al_2O_3$, $Si_2ON_2$ und Titanoxid $TiO_2$, wobei das $TiO_2$ als Katalysator der Sialon-Bildung wirkt und gleichzeitig eine Verkleinerung der Korngröße des Basismaterials auf 0,3 bis 0,5 $\mu$m bewirkt.

Die Sialon-Bildung verläuft umso intensiver,

- je geringer die Korngröße des Basismaterials ist

- je niedriger die Schmelztemperatur der flüssigen Phase an den Korngrenzen ist und je länger diese erhalten bleibt

- je gleichmäßiger die flüssige Phase die Oberflächen an den Korngrenzen benetzt.

Zur Senkung der Schmelztemperatur der flüssigen Phase und zur Verbesserung der Benetzung der Siliziumnitridkristalle durch die flüssige Phase wird das Kalziumoxid CaO in geringer Menge beigegeben.

Die neue Verbindung entsteht in folgendem Prozeßablauf:

- Lösung kleiner Siliziumnitridkristalle in der flüssigen Phase an der Korngrenze

- Wechselwirkung in der Schmelze mit den Komponenten der Korngrenzenphase

- Massetransport zu den Kristallisationspunkten der neuen Phase bzw. zu den wachsenden großen Kristallen.

Dieser Prozeß läuft bis zum Verbrauch allen Materials der flüssigen Phase ab oder kann durch Abkühlung gestoppt werden.

Durch die Einführung der flüssigen Phase in den Sinterprozeß werden die Korngrenzenzustände des neuen Materials wesentlich verbessert und dadurch eine höhere Wärmeleitfähigkeit und Hitzebeständigkeit bei vorgegebenen elektrischen Parametern erzielt. Zur Herstellung der Stromleiterkeramik wird in die mit Tantalnitrid TaN oder Nitriden, Karbiden oder Boriden des Tantal oder Zirkonium versetzte Keramikmischung zusätzlich Kohlenstoff eingegeben. Dieser verbindet sich mit dem freien Sauerstoff des Gemenges und tritt beim Sintern in Gasform aus. Dadurch wird die Langzeitstabilität insbesondere der elektrischen Parameter gewährleistet.

Zusammenfassend wird folgendes festgestellt: Die Erfindung bezieht sich auf ein keramisches Heizelement und ein Verfahren zu dessen Herstellung, bei welchem ein wärmeleitender dielektrischer Grundkörper 10 aus keramischem Material und ein mit elektrischem Strom beaufschlagbarer Heizleiter 16,18 in unmittelbaren thermischen Kontakt gebracht werden. Um bei gegebener Heizleistung eine möglichst niedrige Stromdichte im Heizleiter 16,18 zu erhalten und eine hohe Thermoschockbeständigkeit zu gewährleisten, wird gemäß der Erfindung vorgeschlagen, daß der Heizleiter 16,18 als in eine kanalartige Ausnehmung 12,14 des dielektrischen Grundkörpers 10 eingebetteter, mit elektrisch leitfähigen Partikeln dotierter, an seiner Oberfläche mit dem Keramikmaterial des Grundkörpers 10 monolithartig zusammengesinterter und an mindestens zwei Enden zu Kontaktabgriffen 1,2,3 an der Grundkörperoberfläche geführter Keramikstrang 16,18 gebildet ist, der ebenso wie der Grundkörper ein Mehrkomponentengemenge mit den Hauptbestandteilen $Si_3N_4$ und $Si_2ON_2$ als Keramikmaterial enthält.

## Patentansprüche

1. Heizelement mit einem wärmeleitenden dielektrischen Grundkörper (10) aus gesintertem keramischem Material und mindestens einem mit dem Grundkörper (10) thermisch gekoppelten, mit elektrischem Strom beaufschlagbaren Heizleiter (16,18), wobei der Heizleiter (16,18) als in eine kanalartige Ausnehmung (12,14) des dielektrischen Grundkörpers (10) eingebetteter, mit elektrisch leitfähigen Partikeln dotierter, an seiner Oberfläche mit dem Keramikmaterial des Grundkörpers (10) monolithartig zusammengesinterter und mit mindestens zwei Kontaktabgriffen (1,2,3,4) versehener Keramikstrang (16,18) gebildet ist, **dadurch gekennzeichnet**, daß der Keramikstrang (16,18) an mindestens zwei die Kontaktabgriffe (1,2,3,4) bildendenden Enden zur Grundkörperoberfläche geführt ist.

2. Heizelement nach Anspruch 1, **dadurch gekennzeichnet**, daß der Keramikstrang (16,18) das gleiche Keramikmaterial wie der dielektrische Grundkörper (10) enthält.

3. Heizelement nach Anspruch 2, **dadurch gekennzeichnet**, daß der Keramikstrang (16,18) zu 50 bis 90 % aus dem Keramikmaterial des Grundkörpers (10) besteht.

4. Heizelement nach einem der Ansprüche 1 bis 3, **dadurch gekennzeichnet**, daß der Keramikstrang (16,18) einen Volumenanteil von 1 bis 10 % bezogen auf das Grundkörpervolumen aufweist.

5. Heizelement nach einem der Ansprüche 1 bis 4, da**durch gekennzeichnet**, daß der dielektrische Grundkörper (10) und der Keramikstrang (16,18) ein Gemisch aus $Si_3N_4$ und $Si_2ON_2$ vorzugsweise im Volumenverhältnis 5:1 bis 18:1 als Keramikmaterial enthalten.

6. Heizelement nach Anspruch 5, **dadurch gekennzeichnet**, daß das Gemisch zusätzlich Oxidkomponenten aus der Gruppe $Al_2O_3$-$TiO_2$-CaO mit einem Volumenanteil von 10 bis 30 % enthält.

7. Heizelement nach Anspruch 6, **dadurch gekennzeichnet**, daß die Oxidkomponenten $Al_2O_3$-$TiO_2$-CaO etwa im Volumenverhältnis von 14:5:1 bis 5:1:2 beigemischt sind.

8. Heizelement nach einem der Ansprüche 1 bis 7, **dadurch gekennzeichnet**, daß der Keramikstrang (16,18) als elektrisch leitfähige Pulverpartikel Nitride, Carbide und/oder Boride des Tantal oder Zirkonium und Kohlenstoff in einem durch einen vorgegebenen temperaturabhängigen Widerstand elektrisch angepaßten Mengenverhältnis enthält.

9. Heizelement nach einem der Ansprüche 1 bis 8, **dadurch gekennzeichnet**, daß in einem Teilstück (10', 10'', 10''', $10^{IV}$,$10^V$) des Grundkörpers (10) mindestens eine Ausnehmung (12,14) zur paßgenauen Aufnahme eines Keramikstrangteils (16') ausgespart ist.

10. Heizelement nach Anspruch 9, **dadurch gekennzeichnet**, daß der Grundkörper (10) aus mindestens zwei an einander zugewandten Trennflächen monolithartig zusammengesinterten Teilstücken (10',10'',10''',$10^{IV}$, $10^V$) gebildet ist, von denen mindestens eines eine Ausnehmung (12,14) zur paßgenauen Aufnahme eines Keramikstrangteils (16',16'',18') aufweist.

11. Heizelement nach Anspruch 10, **dadurch gekennzeichnet**, daß die einander zugewandten Teilstücke des Grundkörpers (10) als an ihren Breitseiten paarweise zusammengesinterte Platten oder Rohrstücke ausgebildet sind.

12. Heizelement nach einem der Ansprüche 1 bis 11, **dadurch gekennzeichnet**, daß mindestens zwei durch ein inneres Teilstück (10''') voneinander getrennte, mit Durchbrüchen (12) für je einen Keramikstrang (16) versehene Teilstücke (10'',$10^{IV}$) vorgesehen sind.

13. Heizelement nach Anspruch 12, **dadurch gekennzeichnet**, daß die Keramikstränge (16) in der Nähe eines Kontaktabgriffs (1,2,3,4) miteinander verbunden, vorzugsweise zusammengesintert sind.

14. Heizelement nach einem der Ansprüche 1 bis 13, **dadurch gekennzeichnet**, daß die Keramikstränge (16) mehrere durch Fensterausnehmungen (14) zur Grundkörperoberfläche geführte Kontaktabgriffe (1 bis 4) aufweisen.

15. Heizelement nach einem der Ansprüche 1 bis 14, **dadurch gekennzeichnet**, daß die Kontaktabgriffe (1 bis 4) durch in Fensterausnehmungen (14) außenliegender Rohlinge (10') getrennt als Keramikstrangrohlinge (18') eingesetzte, mit dem benachbarten Keramikstrang (16) verpreßte und zusammengesinterte Keramikstrangteile (18) gebildet sind.

16. Heizelement nach einem der Ansprüche 1 bis 15, **dadurch gekennzeichnet**, daß die Kontaktabgriffe (1 bis 4) des Keramikstrangs (12,14) eine Metallschicht tragen.

17. Heizelement nach einem der Ansprüche 1 bis 16, **dadurch gekennzeichnet**, daß an den Kontaktabgriffen (1 bis 4) elektrische Leiter angeklemmt, angelötet oder angeschweißt sind.

18. Heizelement nach einem der Ansprüche 12 bis 17, **dadurch gekennzeichnet**, daß die plattenförmigen oder rohrförmigen Teilstücke (10' bis 10$^V$) eine Wandstärke von 0,3 bis 2 mm aufweisen.

19. Heizelement nach einem der Ansprüche 1 bis 18, **dadurch gekennzeichnet**, daß der Keramikstrang (12,14) einen Leitungsquerschnitt von 0,4 bis 5 mm$^2$ aufweist.

20. Heizelement nach einem der Ansprüche 1 bis 19, **dadurch gekennzeichnet**, daß das Keramikmaterial des Grundkörpers (10) und des Keramikstrangs (16,18) etwa den gleichen linearen Wärmeausdehnungskoeffizienten von vorzugsweise 2,5 bis 3,8 · 10$^{-6}$ K$^{-1}$ aufweisen.

21. Verfahren zur Herstellung eines Heizelements nach einem der Ansprüche 1 bis 20, **dadurch gekennzeichnet**, daß mindestens ein den Grundkörper (10) bildender ungesinterter Rohling (10' bis 10$^V$) aus dielektrischem Keramikmaterial mit mindestens einer kanalartigen Ausnehmung (12,14) versehen wird, daß mindestens ein weiterer ungesinterter Rohling (16', 18') aus einem mit elektrisch leitenden Partikeln dotierten Keramikmaterial unter Bildung des Heizleiters (16, 18) in Strangform gebracht und in die kanalartige Ausnehmung (12,14) des Grundkörperrohlings (10' bis 10$^V$) formschlüssig eingesetzt, mit diesem unter Herstellung eines engen Oberflächenkontakts mechanisch verpreßt und anschließend bei erhöhter Temperatur und/oder erhöhtem Druck monolithartig zusammengesintert wird.

22. Verfahren nach Anspruch 21, **dadurch gekennseichnet**, daß zur Herstellung des Grundkörpers (10) mehrere bandförmige, plattenförmige oder rohrförmige Rohlinge (10' bis 10$^V$) verwendet werden, von denen einzelne mit den kanalartigen Ausnehmungen (12,14) vorzugsweise in Form von Durchbrüchen versehen, in den Ausnehmungen (12,14) mit dem strangförmigen Heizleiterrohling (16',18) bestückt und dann mit den anderen Grundkörperrohlingen sandwichartig gegeneinandergelegt oder ineinandergeschachtelt, gegeneinandergepreßt und zusammengesintert werden.

23. Verfahren nach Anspruch 21 oder 22, **dadurch gekennzeichnet**, daß die ungesinterten Rohlinge (10' bis 10$^V$) ein vorzugsweise elastomeres Bindemittel enthalten, das beim Sintern zumindest teilweise verdampft wird.

24. Verfahren nach einem der Ansprüche 21 bis 23, **dadurch gekennzeichnet,** daß die auf Si$_3$N$_4$-Si$_2$ON$_2$-Basis hergestellten Rohlinge (10' bis 10$^{IV}$,16',18') bei Temperaturen von 1600 bis 1800 °C zusammengesintert werden.

25. Verfahren nach Anspruch 24, **dadurch gekennzeichnet**, daß die Rohlinge auf Si$_3$N$_4$-Si$_2$ON$_2$-Basis bei einem Druck von 50 bis 70 bar in Stickstoffatmosphäre zusammengesintert werden.

26. Verfahren nach einem der Ansprüche 21 bis 25, **dadurch gekennzeichnet,** daß in einem der Grundkörper-rohlinge mindestens ein mit der kanalartigen Ausnehmung (12) kommunizierender, zur Grundkörperoberfläche führender fensterartiger Durchbruch (14) für den Durchgriff eines einen Kontaktabgriff (1,2,3,4) bildenden Endes des Heizleiterrohlings (16',18') eingebracht wird.

27. Verwendung des keramischen Heizelements nach einem der Ansprüche 1 bis 20 zur Herstellung von Heizvorrichtungen in Heizplatten, Durchlauferhitzern, Infrarotstrahlern und Heizextrudern.

**Claims**

1. Heating element with a heat-conducting dielectric basic body (10) made of sintered ceramic material, and at least one heating conductor (16, 18) which is thermally coupled to the basic body (10) and can be loaded with electric current, the said heating conductor (16, 18) being formed as a ceramic strand (16, 18) which is embedded in a channel-like recess (12, 14) in the dielectric basic body (10), is endowed with electrically conductive particles, is sintered together, at its surface, with the ceramic material of the basic body (10) in a monolith-like manner and is provided with at least two contact pick-ups (1, 2, 3, 4), **characterised in that** the ceramic strand (16, 18) is routed, at at least two ends which form the contact pick-ups (1, 2, 3, 4), to the surface of the basic body.

2. Heating element according to claim 1, **characterised in that** the ceramic strand (16, 18) contains the same ceramic material as the dielectric basic body (10).

3. Heating element according to claim 2, **characterised in that** 50 to 90% of the ceramic strand (16, 18) consists of the ceramic material of the basic body (10).

4. Heating element according to one of claims 1 to 3, **characterised in that** the ceramic strand (16, 18) has a 1 to 10% share of the volume, referred to the volume of the basic body.

5. Heating element according to one of claims 1 to 4, **characterised in that** the dielectric basic body (10) and the ceramic strand (16, 18) contain a mixture of $Si_3N_4$ and $Si_2ON_2$, preferably in a volume ratio of 5: 1 to 18:1, as the ceramic material.

6. Heating element according to claim 5, **characterised in that** the mixture additionally contains oxide components from the $Al_2O_3$-$TiO_2$-CaO group, with a 10 to 30% share of the volume.

7. Heating element according to claim 6, **characterised in that** the oxide components $Al_2O_3$-$TiO_2$-CaO are admixed in approximately the volume ratio of 14:5:1 to 5:1:2.

8. Heating element according to one of claims 1 to 7, **characterised in that** the ceramic strand (16, 18) contains, as the electrically conductive powder particles, nitrides, carbides and/or borides of tantalum or zirconium and carbon in a quantitative ratio which is electrically adapted by a predetermined, temperature-dependent resistance.

9. Heating element according to one of claims 1 to 8, **characterised in that** at least one recess (12, 14) for receiving part (16') of the ceramic strand in an accurately fitting manner, is hollowed out in a partial piece (10', 10'', 10''', $10^{IV}$, $10^V$) of the basic body (10) .

10. Heating element according to claim 9, **characterised in that** the basic body (10) is formed from at least two partial pieces (10', 10'', 10''', $10^{IV}$, $10^V$) which are sintered together at mutually facing interfaces in a monolith-like manner and of which at least one has a recess (12, 14) for receiving part (16', 16'', 18') of the ceramic strand in an accurately fitting manner.

11. Heating element according to claim 10, **characterised in that** the mutually facing partial pieces of the basic body (10) are constructed as plates or pieces of tube which are sintered together in pairs on their broad sides.

12. Heating element according to one of claims 1 to 11, **characterised in that** at least two partial pieces (10'', $10^{IV}$) are provided, which are separated from one another by an inner partial piece (10''') and are provided with openings (12) for one ceramic strand (16) in each case.

13. Heating element according to claim 12, **characterised in that** the ceramic strands (16) are connected to one another, preferably sintered together, in the vicinity of a contact pick-up (1, 2, 3, 4).

14. Heating element according to one of claims 1 to 13, **characterised in that** the ceramic strands (16) have a number of contact pick-ups (1 to 4) which are routed to the surface of the basic body through window recesses (14).

15. Heating element according to one of claims 1 to 14, **characterised in that** the contact pick-ups (1 to 4) are formed by parts (18) of the ceramic strand which are inserted separately, as ceramic strand blanks (18'), in window recesses (14) in externally located blanks (10'), and are pressed, and sintered together, with the adjacent ceramic strand (16).

16. Heating element according to one of claims 1 to 15, **characterised in that** the contact pick-ups (1 to 4) of the ceramic strand (12, 14) carry a metal coating.

17. Heating element according to one of claims 1 to 16, **characterised in that** electrical conductors are clamped, soldered or welded to the contact pick-ups (1 to 4).

18. Heating element according to one of claims 12 to 17, **characterised in that** the plate-shaped or tube-shaped partial pieces (10' to $10^V$) have a wall thickness of 0.3 to 2 mm.

19. Heating element according to one of claims 1 to 18, **characterised in that** the ceramic strand (12, 14) has a conducting cross-section of 0.4 to 5 mm$^2$.

20. Heating element according to one of claims 1 to 19, **characterised in that** the ceramic material of the basic body (10) and that of the ceramic strand (16, 18) have approximately the same linear coefficient of thermal expansion of preferably 2.5 to 3.8 . 10$^{-6}$K$^{-1}$.

21. Process for producing a heating element according to one of claims 1 to 20, **characterised in that** at least one unsintered blank (10' to 10$^V$) forming the basic body (10) and made of dielectric ceramic material is provided with at least one channel-like recess (12, 14), and that at least one further unsintered blank (16', 18') made of a ceramic material endowed with electrically conductive particles is put into strand form, forming the heating conductor (16, 18), and is inserted in the channel-like recess (12, 14) in the basic body blank (10' to 10$^V$) in a form-locking manner and mechanically pressed, producing a close surface contact, and then sintered together in a monolith-like manner at elevated temperature and/or elevated pressure, with the said blank.

22. Process according to claim 21, **characterised in that** use is made, for producing the basic body (10), of a number of strip-shaped, plate-shaped or tube-shaped blanks (10' to 10$^V$), of which individual ones are provided with the channel-like recesses (12, 14), preferably in the form of openings, are equipped, in the recesses (12, 14), with the strand-shaped heating conductor blank (16', 18) and then, in a sandwich-like manner with the other basic body blanks, laid against or fitted into one another, pressed against one another and sintered together.

23. Process according to claim 21 or 22, **characterised in that** the unsintered blanks (10' to 10$^V$) contain a preferably elastomeric bonding agent, which is at least partially evaporated during sintering.

24. Process according to one of claims 21 to 23, c**haracterised in that** the blanks (10' to 10$^{IV}$, 16', 18') produced on a $Si_3N_4/Si_2ON_2$ basis are sintered together at temperatures of 1600 to 1800°C.

25. Process according to claim 24, **characterised in that** the blanks on a $S_3N_4/Si_2ON_2$ basis are sintered together at a pressure of 50 to 70 bar in a nitrogen atmosphere.

26. Process according to one of claims 21 to 25, **characterised in that** there is incorporated, in one of the basic body blanks, at least one window-like opening (14), which communicates with the channel-like recess (12) and leads to the surface of the basic body, for the passage of one end, which forms a contact pick-up (1, 2, 3, 4), of the heating conductor blank (16', 18').

27. Use of the ceramic heating element according to one of claims 1 to 20 for the production of heating devices in hot plates, continuous-flow heaters, infrared heaters and heating-type extruders.

**Revendications**

1. Elément chauffant, comprenant un corps de base (10) diélectrique conducteur de chaleur constitué d'un matériau céramique fritté et au moins un conducteur chauffant (16, 18) couplé thermiquement avec le corps de base (10) et pouvant être alimenté en courant électrique, le conducteur chauffant (16, 18) étant réalisé sous la forme d'une barre de céramique (16, 18) encastrée dans un évidement (12, 14) du corps de base (10) diélectrique en forme de canal, dopée de particules électriquement conductrices, frittée à sa surface de manière monolithique avec le matériau céramique du corps de base (10), et munie d'au moins deux prises de contact (1, 2, 3, 4), **caractérisé en ce** que la barre de céramique (16, 18) est amenée à au moins deux extrémités formant les prises de contact (1, 2, 3, 4), vers la surface du corps de base.

2. Elément chauffant selon la revendication 1, caractérisé en ce que la barre de céramique (16, 18) contient le même matériau céramique que le corps de base diélectrique (10).

3. Elément chauffant selon la revendication 2, caractérisé en ce que la barre de céramique (16, 18) est composée pour 50 % à 90 % du matériau céramique du corps de base (10).

4. Elément chauffant selon l'une des revendications 1 à 3, caractérisé en ce que la barre de céramique (16, 18) présente une part de volume de 1 à 10 % rapportée au volume du corps de base.

**5.** Elément de chauffe selon l'une des revendications 1 à 4, caractérisé en ce que le corps de base diélectrique (10) et la barre de céramique (16, 18) contiennent comme matériau céramique un mélange de $Si_3N_4$ et de $Si_2ON_2$, de préférence dans le rapport de volumes de 5 : 1 à 18 : 1.

**6.** Elément chauffant selon la revendication 5, caractérisé en ce que le mélange contient, en supplément, des composants d'oxydes appartenant aux groupe $Al_2O_3$-$TiO_2$-CaO avec une part de volume de 10 à 30 %.

**7.** Elément chauffant selon la revendication 6, caractérisé en ce que les composants d'oxydes $Al_2O_3$-$TiO_2$-CaO sont ajoutés dans le rapport de volumes d'environ 14 : 5 : 1 à 5 : 1 : 2.

**8.** Elément chauffant selon l'une des revendications 1 à 7, caractérisé en ce que la barre de céramique (16, 18) contient comme particules de poudre électriquement conductrices, des nitrures, des carbures et/ou des borures de tantale ou de zirconium et de carbone dans un rapport de mélange électriquement adapté par une résistance prédéterminée qui varie avec la température.

**9.** Elément chauffant selon l'une des revendications 1 à 8, caractérisé en ce que dans un tronçon (10', 10'', 10''', 10$^{IV}$, 10$^V$) du corps de base (10) est ménagé au moins un évidement (12, 14) pour la réception ajustée d'un élément de barre de céramique (16').

**10.** Elément chauffant selon la revendication 9, caractérisé en ce que le corps de base (10) est constitué d'au moins deux tronçons (10', 10'', 10''', 10$^{IV}$, 10$^V$) frittés ensemble de manière monolithique sur des surfaces de séparation tournées l'une vers l'autre, dont au moins l'un présente un évidement (12, 14) pour la réception ajustée d'un élément de barre de céramique (16', 16'', 18').

**11.** Elément chauffant selon la revendication 10, caractérisé en ce que les tronçons du corps de base (10) tournés les uns vers les autres sont réalisés sous la forme de plaques ou de tronçons de tube frittés ensemble par paires sur leurs côtés larges.

**12.** Elément chauffant selon l'une des revendications 1 à 11, caractérisé en ce qu'il comprend au moins deux tronçons (10'', 10$^{IV}$) séparés par un tronçon intérieur (10''') et munis de percements (12) pour respectivement une barre de céramique (16).

**13.** Elément chauffant selon la revendication 12, caractérisé en ce que les barres de céramique (16) sont réunies, de préférence frittées ensemble, à proximité d'une prise de contact (1, 2, 3, 4).

**14.** Elément chauffant selon l'une des revendications 1 à 13, caractérisé en ce que les barres de céramique (16) présentent plusieurs prises de contact (1 à 4) amenées au travers d'évidements en forme de fenêtres (14), à la surface du corps de base.

**15.** Elément chauffant selon l'une des revendications 1 à 14, caractérisé en ce que les prises de contact (1 à 4) sont formées par des tronçons de barre de céramique (18) insérés séparément, en tant qu'ébauches de barres de céramique (18'), dans des ébauches (10') situées à l'extérieur dans des évidements en forme de fenêtres (14), comprimés et frittés avec la barre de céramique (16) voisine.

**16.** Elément chauffant selon l'une des revendications 1 à 15, caractérisé en ce que les prises de contact (1 à 4) de la barre de céramique (12, 14) portent une couche métallique.

**17.** Elément chauffant selon l'une des revendications 1 à 16, caractérisé en ce que sur les prises de contact (1 à 4) sont serrés, brasés ou soudés des conducteurs électriques.

**18.** Elément chauffant selon l'une des revendications 12 à 17, caractérisé en ce que les tronçons (10' à 10$^V$) en forme de plaques ou de tubes présentent une épaisseur de paroi de 0,3 à 2 mm.

**19.** Elément chauffant selon l'une des revendications 1 à 18, caractérisé en ce que la barre de céramique (12, 14) présente une section de conducteur de 0,4 à 5 mm$^2$.

**20.** Elément chauffant selon l'une des revendications 1 à 19, caractérisé en ce que les matériaux céramiques du corps de base (10) et de la barre de céramique (16, 18) présentent sensiblement le même coefficient de dilatation thermique, de préférence de 2,5 à 3,8 · 10$^{-6}$ K$^{-1}$.

21. Procédé de fabrication d'un élément chauffant selon l'une des revendications 1 à 20, **caractérisé en ce** qu'au moins une ébauche non frittée (10' à 10$^V$) formant le corps de base (10) et constituée d'un matériau céramique diélectrique est munie d'au moins un évidement (12, 14) en forme de canal, qu'au moins une autre ébauche non frittée (16', 18') constituée d'un matériau céramique dopé de particules électriquement conductrices est amenée à une forme de barre, avec formation du conducteur chauffant (16, 18), et insérée à engagement positif dans l'évidement (12, 14) en forme de canal de l'ébauche de corps de base (10' à 10$^V$), comprimée mécaniquement avec celle-ci, avec réalisation d'un contact de surface serré, puis frittée de manière monolithique sous une température accrue et/ou une pression accrue.

22. Procédé selon la revendication 21, caractérisé en ce qu'il utilise pour la réalisation du corps de base (10) plusieurs ébauches (10' à 10$^V$) en forme de bandes, de plaques ou de tubes dont certaines, munies des évidements (12, 14) en forme de canaux, sont équipées dans les évidements (12, 14) de l'ébauche de conducteur chauffant (16', 18) en forme de barre, puis, appliquées ou emboîtées avec les autres ébauches de corps de base, pressées et frittées ensemble.

23. Procédé selon la revendication 21 ou 22, caractérisé en ce que les ébauches non frittées (10' à 10$^V$) contiennent un liant, de préférence élastomère, qui est évaporé au moins en partie lors du frittage.

24. Procédé selon l'une des revendications 21 à 23, caractérisé en ce que les ébauches (10' à 10$^V$, 16', 18') réalisées sur la base de $Si_3N_4$-$Si_2ON_2$ sont frittées ensemble à des températures de 1600 à 1800°C.

25. Procédé selon la revendication 24, caractérisé en ce que les ébauches à base de $Si_3N_4$-$Si_2ON_2$ sont frittées ensemble sous une pression de 50 à 70 bars sous atmosphère d'azote.

26. Procédé selon l'une des revendications 21 à 25, caractérisé en ce que dans l'une des ébauches de corps de base est ménagé au moins un percement (14) en forme de fenêtre communiquant avec l'évidement (12) en forme de canal, pour le passage d'une extrémité de l'ébauche de conducteur chauffant (16', 18') formant une prise de contact (1, 2, 3, 4).

27. Utilisation de l'élément céramique chauffant selon l'une des revendications 1 à 20 pour la réalisation de dispositifs de chauffage dans des plaques chauffantes, des chauffe-eau instantanés, des radiateurs aux rayons infrarouges et des extrudeuses chauffantes.

Fig. 1a

Fig. 1b

Fig. 2a

Fig. 2b

Fig. 3a

14

10'

12

10"

10'''

Fig. 3b

# Fig. 4a

# Fig. 4b